# EUROPEAN PATENT SPECIFICATION

(11) **EP 2 564 560 B1**
(45) Date of publication and mention of the grant of the patent: **16.12.2015**
(21) Application number: 10850870.6
(22) Date of filing: 29.04.2010
(51) Int. Cl.: H04L 29/08, G06F 17/30

(54) **INFORMATION TRACKING SYSTEM AND METHOD**
SYSTEM UND VERFAHREN ZUR INFORMATIONSVERFOLGUNG
SYSTÈME ET PROCÉDÉ DE SUIVI D'INFORMATIONS

(43) Date of publication of application: 06.03.2013
(73) Proprietor: Hewlett-Packard Development Company, L.P., Houston, Texas 77070 (US)
(72) Inventor: SIMSKE, Steven J., Colorado 80528-9544 (US); COUGHLAN, Chris, Galway (IE); JACOBSEN, Mark, Galway (IE); KEYES, Mick, Leixlip (IE); MOLONEY, Gary, Galway (IE)
(74) Representative: Stöckeler, Ferdinand
(86) International application number: PCT/US2010/033013
(87) International publication number: WO 2011/136781

(56) References cited:
- WO-A1-2008/086507
- US-A1- 2003 137 968
- US-A1- 2003 227 392
- US-A1- 2003 227 392
- US-A1- 2006 047 543
- US-A1- 2006 168 644
- US-A1- 2007 265 866
- US-A1- 2008 005 287
- US-A1- 2008 294 488
- US-A1- 2010 039 284

## Description

### BACKGROUND

The present disclosure relates generally to an information tracking system and method.

Companies and individuals often utilize systems in order to electronically manage products and/or documents. Some systems are closed to the company/individual (i.e., data can be selectively added to and retrieved from the system by the employees of the company and/or by the individual), and other systems are open to a variety of companies/individuals (i.e., data can be selectively added to and retrieved from the system by the employees of the various companies and/or by the various individuals) who subscribe to such a system. When the system is open to a variety of users, many of the users may be involved in a single product and/or document workflow (e.g., a product track and trace workflow). In these instances, the products and/or documents themselves may be tied to a specific lifecycle (e.g., validation at point A, handoff to point B, validation at point B, etc.), or to a set of prescribed sequential activities that are to be performed. The provenance record (i.e., document/product pedigree) for such a workflow depends, at least in part, upon the specific lifecycle and the processing/handling of the document in accordance with this lifecycle.

### BRIEF DESCRIPTION OF THE DRAWING

Features and advantages of embodiments of the present disclosure will become apparent by reference to the following detailed description and drawings, in which like reference numerals correspond to similar, though perhaps not identical, components. For the sake of brevity, reference numerals or features having a previously described function may or may not be described in connection with other drawings in which they appear,
Fig. 1 is a schematic diagram of an embodiment of an information tracking system;
Fig. 2 is a flow diagram illustrating an embodiment of a method for tracking sensor data utilizing an embodiment of the information tracking system;
Fig. 3 is a schematic flow diagram illustrating an example of when the tracking of sensor data may take place in a product supply chain;
Fig. 4 is a flow diagram illustrating a specific embodiment of the method for tracking sensor data; and
Figs. 5A and 5B are schematic diagrams illustrating examples of screen shots of a product workflow before and after sensor data is tracked using an embodiment of the information tracking system.

### DETAILED DESCRIPTION

Embodiments of the information tracking system disclosed herein include a platform for combining sensor data of subscribers and non-subscribers with pollable (i.e., capable of being interrogated) and/or self-reporting product and/or document sensors, and a ubiquitous on-ramp to this sensor data. Sensor data includes, in one embodiment, environmental data/reports which are sampled, filtered, stored, and utilizes to update the system. As such, the environmental sensor data collected may range from item-specific information to aggregated statistics that may affect the item at some point in the supply chain, workflow, etc. Furthermore, the system disclosed herein enables sensor information to be collected at any time, regardless of where the document and/or product is physically present, for example, in the supply chain, workflow, etc. The analysis of the sensor data may result in the addition of information to, the deletion of information from, and/or the replacement of information in the system; and/or the identification of incorrect or missed processing; and/or the identification of where a problem occurred or where a problem may occur. As such, the system disclosed herein may assist in creating an accurate provenance record (i.e., history) of a product and/or document. The embodiments of the information tracking system disclosed herein may be used to manage product and/or document based compliance, auditing, and workflow progress and completion, as well as to perform other enterprise or consumer/brand relevant tasks (e.g., brand protection/anti-counterfeiting efforts and customer/brand interaction).

As used herein, the phrase "workflow" refers to an automated process during which products, documents, information, or tasks are passed from one participant to another for action or informative purposes, according to a set of procedural rules. Workflows include imaging workflows (e.g., quality assurance, authentication, forensics, etc.), supply chain workflows (e.g., track and trace, inspection, shipping/receiving, recall, etc.), environmental or sensor data monitoring workflows, or other suitable workflows (e.g., statistics (e.g., inventory, average time at a node, etc.), compliance, auditing, etc.). In other words, a workflow is any defined set of tasks to complete associated with a product and/or document. A workflow provenance consists of a template outlining the history of the products/documents/information/tasks and any actions taken or information received pertaining to the workflow. The provenance maps, and in some instances links, the various elements of the workflow together. In one example, the workflow provenance is a full, auditable log of all of the tasks completed in the workflow along with associated information (e.g., who performed the tasks, locations where tasks were performed, digital signatures therewith, etc.). Also as used herein, a "node" refers to a then-current state in the workflow. In one embodiment, if a document moves from a creator to an editor to a subscriber, the respective nodes are, for example, creation, editing, and receiving. At any instance, the node corresponds with a current version of a document (e.g., a composite document, or a document including several items (e.g., PDFs, PPTs, DOCs, etc.) or a current state of a product (e.g., current physical location, a current set of information associated with the product at that state, etc.)). Subsequent states in a workflow will have additional provenance information, but may have different information (e.g., sensor data) associated directly therewith compared to other states/nodes in the workflow. It is to be understood that nodes can also be in parallel, for example, when multiple recipients need.to acknowledge receipt.

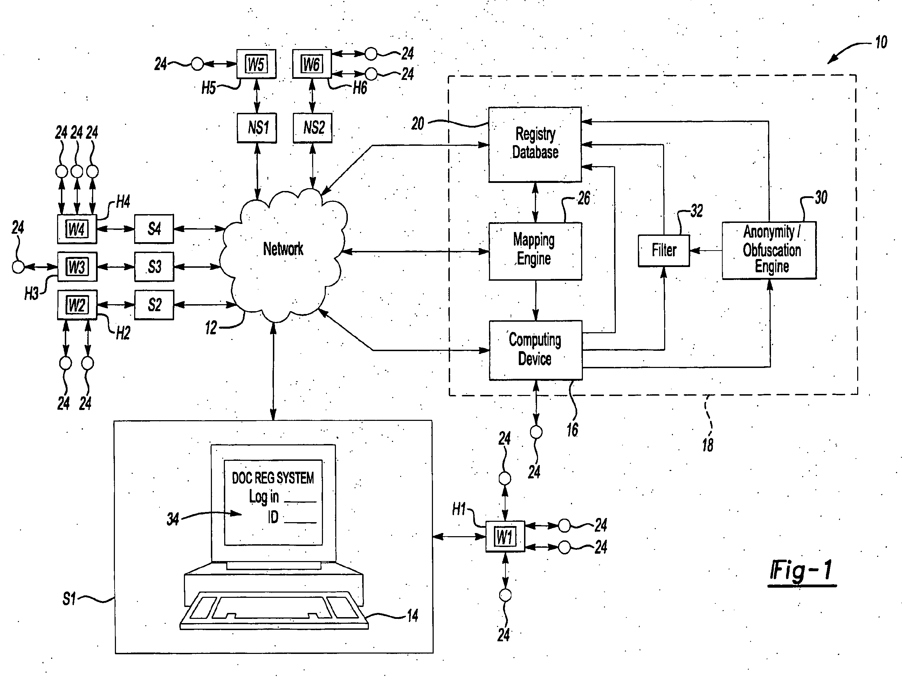

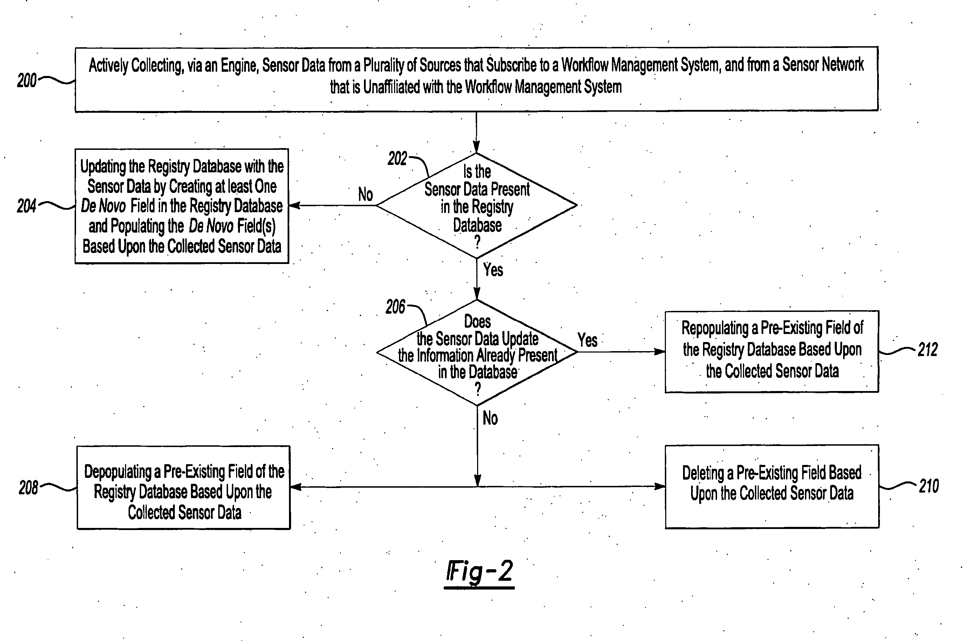

Referring now to Fig. 1, a schematic diagram of an embodiment of the system 10 is depicted. Each system 10 component will be described briefly in reference to Fig. 1, and the functions of the components will be described in detail in reference to Figs. 2, 3, 4 and 5A through 5C.

The system 10 includes a cloud computing network 12, which is a virtualized bank of computers (e.g., processors and/or servers) that enables Internet-based computing. Via the cloud network 12, shared resources, software and information are provided to various computing devices 14, 16 (whether stationary (e.g., desktop computers) or mobile (e.g., laptop computers, netbooks, cellular phones, personal digital assistants (PDAs), etc.)) on-demand. The cloud computing network 12 allows the information tracking system provider (not shown) to deliver the workflow management system 18 and its various services to subscribers S1, S2, S3, S4 online via another web service or software, such as a web browser. Software and data associated with the cloud computing network 12 are stored on servers and their associated memory (not shown).

As used herein, subscribers S1, S2, S3, S4 include those companies and/or individuals who sign up for one or more services offered by the owner/operator of a workflow management system 18. Some subscribers S1, S2, S3, S4 are linked to one another because they alter the node of a workflow that the respective subscribers S1, S2, S3, S4 participate in. It is to be understood that the subscribers S1, S2, S3, S4 may or may not be aware of the other participants in a workflow. When the subscriber S1, S2, S3, S4 is a company, one or more individuals associated with the company may be provided with system 18 identification/authentication access criteria. Furthermore, the various individuals of a subscriber company given access to the system 18 may have different information access levels. These levels may be set (e.g., by a manager or other authority figure) during an initial sign-up period, and are saved, for example, in a profile associated with that subscriber in the database 20. These levels may also be set based upon the workflow in which the subscriber S1, S2, S3, S4 takes part (e.g., a participant in a clinical trial may not have access to records of other participants in the clinical trial). It is to be understood that users may be added and/or deleted, and that access levels of existing users may be changed by an individual at the subscriber having authority to make these changes. Access levels may also depend, at least, in part, upon the security policies, compliance/auditing rules (Sarbanes-Oxley, HIPAA, etc.), and other business rules of the subscriber S1, S2, S3, S4.

One or more subscribers S1, S2, S3, S4 (also referred to herein as sources) may be affiliated with a respective sensor network, each of which includes a web-accessible information storage space W1, W2, W3, W4, a host server H1, H2, H3, H4 of the web-accessible information storage space W1, W2, W3, W4, and one or more sensors 24. The sensors 24 may be selected from surveillance systems, traffic sensing systems, radar sensors, radiofrequency sensors, imaging sensors, global positioning systems, weather sensors (e.g., humidity, barometric pressure, etc.), temperature sensors, devices configured to report predetermined information about an event (e.g., alarm sensors, such as radon, carbon dioxide, or carbon monoxide level sensors, that declare safe or unsafe conditions), devices configured to report predetermined information about a signal type (e.g., sensors scanning frequency bands to see which frequency bands are active, such as, for example, radio frequency scanners), and combinations thereof. Specific examples of pollable sensors (i.e., those that can be interrogated) include radar/THz sensors, RFID, barcodes, overt security markings, etc. Specific examples of self reporting sensors include printed battery and smart tags, blinking devices, electroluminescence devices, etc. The sensors 24 are each positioned to collect a particular type of raw data (e.g., temperature data, seismic data, location data, etc.), and are configured to transmit the collected raw data to the host server H1, H2, H3, H4 in operative communication therewith.

This data may be transmitted in the form of packetized data from the respective sensor 24 to the respective host server H1, H2, H3, H4, on-demand in response to a request for this data (e.g., from a pollable sensor), or during a scheduled upload event (e.g., from a self-reporting sensor), or both on-demand and during scheduled upload events. Transmitted sensor data may also be encrypted, digitally signed, etc. as security demands require: The host server H1, H2, H3, H4 includes a receiver (not shown) that receives the raw data and processor(s) or other computing device(s) (also not shown) that post/posts the raw data, or data derived from the raw data, to the web-accessible information storage space W1, W2, W3, W4. The web-accessible information storage space W1, W2, W3, W4 may be any multi-user, potentially multi-access level, web-accessible registry, web-accessible database, web-accessible posting location, or other web-accessible salient host of information that is associated with a website or a datastore that is web-accessible.

Also as used herein, non-subscribers NS1, NS2 include those companies and/or individuals who have not signed up for one or more services offered by the owner/operator of the workflow management system 18. One or more of the non-subscribers NS1, NS2 may be affiliated with a respective sensor network, each of which includes a web-accessible information storage space W5, W6 a host server H5, H6 of the Web-accessible information storage space W5, W6, and one or more sensors 24. The components of the non-subscribers NS1, NS2 sensor networks function similarly to the components of the subscriber S1, S2, S3, S4 sensor networks. It is to be understood that sensor networks affiliated with non-subscribers NS1, NS2 are considered to be unaffiliated with the information tracking system because they are associated with non-subscribers NS1, NS2 of the workflow management system 18. It is to be further understood that non-subscribers NS1, NS2 may become subscribers S1, S2, S3, S4, and vice versa.

The system 10 may also include one or more dedicated sensor networks, which includes sensors 24 that directly report raw data to the computing device 16 of the system 18. This particular sensor network is dedicated to the workflow management system 18 and collects sensor data specifically for the system 18. This dedicated sensor network may include pollable sensors that are configured to respond to a data upload request of the computing device 16 of the system 18 and/or self-reporting sensors that are programmed report data at predetermined intervals.

The subscribers S1, S2, S3, S4 sensor networks, the non-subscribers NS1, NS2 sensor networks, and/or the dedicated sensor networks may be satellite-based, mobile network-based, or combinations thereof.

Subscribers S1, S2, S3, S4 gain access to the workflow management system 18 via a web service (e.g., a website, webpage, etc.) that provides and displays an access point 34 into the system 18. For example, the access point 34 may be an on-line application that requires log-in, authorization, access rights, etc. The access point 34 may be accessed via any computing device 14 configured to link to the cloud computing network 12. While a single computing device 14 is illustrated in Fig. 1, it is to be understood that a single subscriber S1, S2, S3, S4 may have any number of computing devices 14. The access point 34 may include data entry fields that allow a user to enter personal (e.g., a login ID) and authenticating information (e.g., a password, a PIN, etc.). In other instances, the computing device 14 used to access the access point 34 may include other hardware which, for example, can receive and read a smart card for identification/authentication purposes, or can utilize biometrics for identification/authentication purposes. In the latter example, the device 14 includes or is operatively connected to equipment that takes repeated measurements of physiological and behavioral characteristics to verify the user's identity. Any identifying information entered via the access point 34 is transmitted via the cloud computing network 12 and is received by a back-end (networked) computing device 16 (e.g., a virtualized and/or redundant processor), which analyzes the information and either allows or denies the requesting user access to the system 18.

When the information received at the access point 34 is verified by the back-end computing device 16, the user is able to virtually enter the workflow management system 18. The access granted will depend upon the previously mentioned security levels associated with the user requesting access, and in some instances, will also depend upon security setting(s) that are set directly from the nature of the access point 34 (e.g., requiring an https connection). Upon logging in, the user may access one or more workflows that he/she is privy to, may access his/her or a company profile (if privy to such information), and/or may enter a request/search entry related to any document, product, and/or workflow in the system 18. The request/search entry is entered from the computing device 14 using a set of privileged commands (e.g., in the case of a menu-driven access control system), a free text search (e.g., in the case of a search driven system), or other user interface front end that is available once logged on to the system 18.

Some requests are atomic requests, or relate to a single workflow and/or a single aspect of that workflow. Other requests are molecular requests, which include two or more atomic requests (e.g., relate to multiple aspects of a single workflow). Still other requests are composite requests, which include atomic and/or molecular requests across multiple workflows. As non-limiting examples, the initial requests may relate to finding incomplete tasks in a workflow, out of sequence tasks in a workflow, non-legitimate field entries, overdue tasks, reasons for workflow rejections, statuses (e.g., archival status, current status of one or more products (e.g., status of product shipment), or the like), or any other desirable document, product, and/or workflow related question.

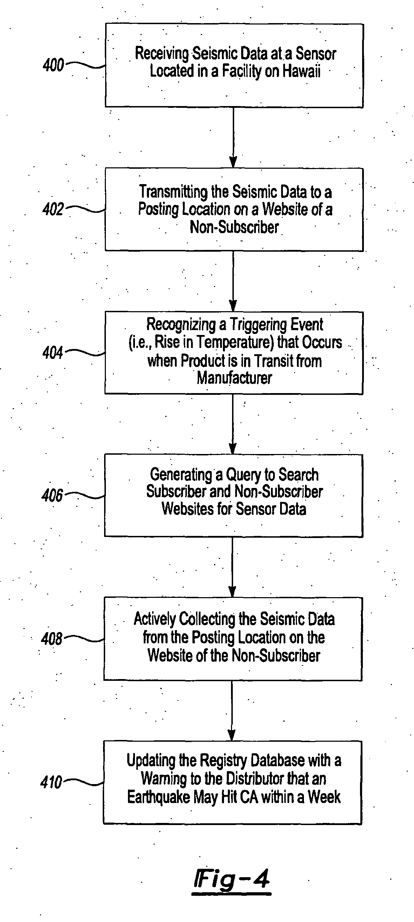

When a request entry is used, the request entry is submitted to the workflow management system 18, which includes a registry database 20, a mapping engine 26, the computing device 16, an anonymity/obfuscation engine 30, and a filter(s) 32. It is to be understood that the components of the system 18 may be implemented in a consolidated location, or portion(s) of the system 18 may be implemented at different locations. It is to be further understood that each of these components is either directly or indirectly in operative communication with the cloud computing network 12, and includes respective software and/or programs that are configured to perform one or more operations of the workflow management system 18, including one or more steps of the embodiments of the methods disclosed herein (see, e.g., Figs. 2 and 4). Furthermore, while a single one of some of the components is shown in Fig. 1, the system 18 may include multiple mapping engines 26, computing devices 16, anonymity/obfuscation engines 30, and filters 32.

The registry database 20 includes hardware for storing data (including sensor data) associated with product and/or documents workflows, and also includes software for presenting this data in pre-existing fields (i.e., part of the original database or previously generated as a result of a previously performed data collection event) or *de novo* fields (i.e., newly generated as a result of a then-current data collection event), both of which will be discussed further hereinbelow. As such, new information may be incorporated into a pre-existing scheme or the pre-existing scheme may be revised in order to incorporate new information. It is to be understood that when data in the registry database 20 is presented to a user of the system 18, the data may be presented to the user in a predetermined format.

Data input into the database 20 may be organized such that a hierarchy of data exists. Query semantics tags may be assigned to the subscribers S1, S2, S3, S4 and/or to one or more workflows after a sensor data search is performed. Specific field(s) of the workflow may be tagged/flagged, specific document(s) or product information within the workflow may be tagged/flagged, and/or specific workflow(s) may be tagged/flagged in order to create the desired hierarchy. The query semantics tags may vary from the trivial to the arcane. As one non-limiting example, the query semantics tags may relate to certain text, such that any document within a particular workflow or the entire workflow is flagged if it contains that text. As another non-limiting example, the query semantics tag may flag the 15 documents in the entire database 20 that are most similar in content to the document that is the subject of a query. The tags may be put in place by the user of the system 18 when logged in to his/her account. These tags/flags may be viewed by any other user that has access to the workflow(s) that are assigned the tags/flags and/or has access to the data that is assigned the tags/flags.

The mapping engine 26 includes hardware and software configured to perform multiple tasks. More particularly, the query mapping engine 26 is the component of the workflow management system 18 that actively collects sensor data from subscribers S1, S2, S3, S4 and non-subscribers NS1, NS2. Active sensor data collection may take place in response to a request entry, to a triggering event, or to an externally imposed condition. A request entry is submitted to the system 18 from a user associated with one of the subscribers S1, S2, S3, S4. These request entries may relate to any document and/or product workflow that the user has access to in the system 18. A triggering event is the occurrence of some preset condition that triggers the data collection. For example, the computing device 16 may be programmed to compare received data with preset acceptable threshold values and ranges. When the device 16 recognizes that received data is above or below a predetermined threshold or outside of a preset range, the device 16 may be configured to prompt the mapping engine 26 to run a query related to the data. In some instances, the trigger may be pre-defined so that its occurrence triggers sensor data input automatically, or it may be an event associated with any large change, including interruption or even oscillation, in ongoing data (i.e., dynamically defined as a trigger event without any semantic definition of the event *a priori*). Changes in ongoing data may be recognized using traditional text mining techniques. Still further, an externally imposed condition may be an audit or another event that prompts the system 18 to update the fields and/or records in the database 20.

In response to recognizing one of these scenarios or being prompted in response to one of these scenarios, the mapping engine 26 is configured to generate a query that will be used to search the sensor networks of the subscribers S1, S2, S3, S4 and the non-subscribers NS1, NS2. In one embodiment the query is based, at least in part, upon the access rules associated with the user who submitted the request/search entry.

Once a suitable query is generated, the mapping engine 26 utilizes the generated query to search for information related to the query. The search is conducted using various websites. More specifically, the engine 26 performs a web service search of the websites affiliated with the various sensor networks disclosed herein. The engine locates one or more of the salient web-accessible information storage spaces W1, W2, W3, W4, W5, W6, and extracts sensor data from these storage spaces W1, W2, W3, W4, W5, W6. Depending upon the query, the search may also be conducted in the database 20 and in the dedicated sensor network. The websites and associated web-accessible information storage spaces W1, W2, W3, W4, W5, W6 sources may be searched via search-based interrogation techniques, such as, for example, via search-engine interrogation, specific site scrubbing (i.e., extracting and filtering of salient information), or other like techniques. In one non-limiting example, the mapping engine 26 searches a non-subscriber web service to find salient databases, inputs information based upon the query, and digests the resulting information.

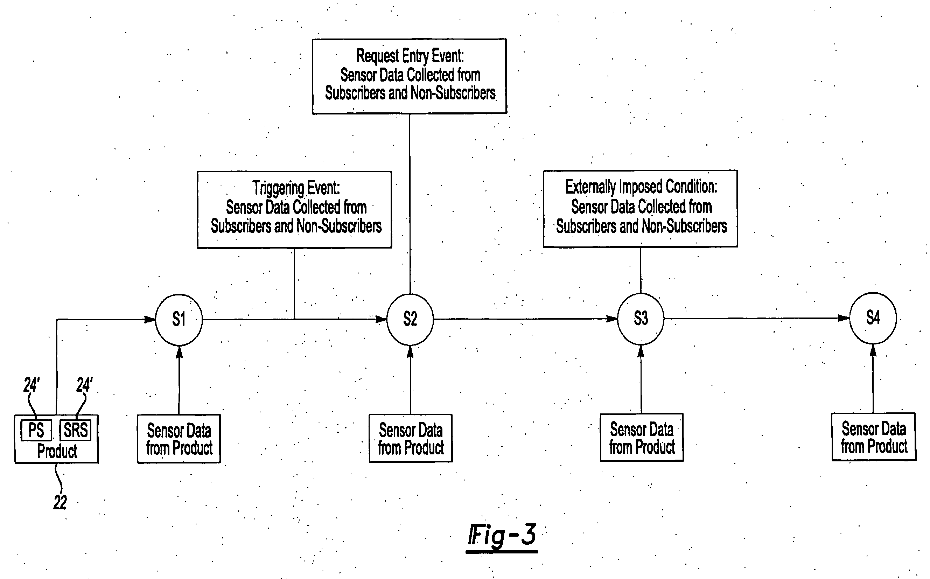

It is to be understood that sensor data may also be input into the system 18 by subscribers S1, S2, S3, S4 from sensors PS, 24, and SRS, 24' (shown in Fig. 3) that are located directly on a product 22 (also shown in Fig. 3). These sensors 24' are pollable sensors PS or self-reporting sensors SRS that transmit data to the computing device 16 when, for example, the sensors PS, 24' are read at a particular subscriber S1, S2, S3, S4 or when the sensors SRS, 24' are programmed to submit this data. The sensor data that is logged in from these particular sensors PS, 24' and SRS, 24' is directly related to the product 22 and/or the conditions to which the product 22 has been exposed because the sensors PS, 24' and SRS, 24' travel with the product 22. Non-limiting examples of product-associated sensors PS, 24' and SRS, 24' include environmental sensors tracking, for example, location (e.g., GPS data), humidity, temperature, carbon dioxide, etc.

All of the collected sensor data is transmitted to the computing device 16, which alone or in conjunction with the anonymity/obfuscation engine 30 and/or the filter 32 is configured to process the data and generate output that is directly transmitted to an originator of a request and/or is used to update the database 20. In particular, the generated output may be used to change and/or update one or more fields in the database 20, thereby altering a workflow currently in the system 18. The computing device 16 is configured to generate analytics (e.g., which process raw data and generate logical data representations of the raw data) after performing one or more analyses on the raw data. The analysis performed will depend, at least in part, upon the query, triggering event, or external condition that initiated the data search. The analysis performed may also depend upon the reputation, reliability, ranking, etc. of the data producer (e.g., subscriber or non-subscriber), especially in instances where there is conflicting data.

If there is no difference in reputation, ranking or reliability, then the most recent data is used first, or a moving average of all data is used, or the like. For example, a request entry from a user may relate to the location of a particular document that needs to be signed by the person making the request entry. The generated query may ask the database 20 for any information about the current location of the document, and once this location information is retrieved, may mine subscriber and non-subscriber websites for sensor data that may be related to the current location. For example, the computing device 16 may receive information from the database 20, which indicates that the document was shipped to the particular person via a courier on Tuesday; and then may receive information from a non-subscriber NS2 website (e.g., the courier's website), which indicates that one of the courier's plane's landed prior to reaching its scheduled destination. The plane location information may be found in a salient database on the courier's website which includes the GPS data of each of the courier's planes, or the GPS data of the location from the shipping identifier, etc.

Once the computing device 16 receives the data, it reviews the query, trigger, or condition that initiated the data collection event to determine the type(s) of analysis that is/are to be performed. The analytics involved may include, among other things, (1) collection of data sufficient to make a decision, (2) making the decision to generate a response, and (3) actually performing the response (e.g., populating the database 20 with the response). In the previous example, since the sensor information received could impact the status of the location (which is the subject of the original request entry), the output generated from the analytics may include a response to the request (i.e., document shipped via courier on Tuesday) and also an alert about the courier's plane pre-destination landing. Additionally, the information received and or generated as a result of the analysis may be graded based upon the severity of the information. If the severity grade is above a threshold level, another query may be performed in an attempt to obtain additional information, and/or manual processes may be triggered (e.g., tasks may be added to the workflow for a particular subscriber), and/or alerts may be sent to specific individuals that are responsible for making decisions related to the information in the workflow.

The anonymity/obfuscation engine 30 is in operative communication with the computing device 16, and is configured to anonymize the analytics and/or output generated by the computing device 16. The anonymity/obfuscation engine 30 receives the generated output when the access level of the user does not enable him/her to access certain information contained in the output. For example, if an engineer logs into the system 18 and notices that a purchasing budget associated with his project is incorrect, his request entry may ask who approved the purchasing budget. If the engineer's access level requires that he is not privy to this information, the anonymity/obfuscation engine 30 may ensure that the generated output includes a generic message (e.g., "a manager approved the purchasing budget" or "you do not have access to such information").

The filter 32 is also in operative communication with the computing device 16 (and the anonymity/obfuscation engine 30), and is configured to aggregate, categorize, and/or classify the analytics and/or output generated by the computing device 16. A set of rules may be associated with the filter 32 that enables it to search the received data for keywords and information associated with the keywords. For example, the filter 32 may scan for specific analytics triggering or indexing terms, such as "signature", "approved", "rejected", "re-apply", "cancelled", etc. in order to re-structure the output of the analysis into presentable form for the user, taking into any access rights associated with the particular user. As such, the filter 32 allows salient data to be retained and disregards irrelevant data.

As illustrated in Fig. 2, after the engine 26 actively collects data from sensor networks associated with one or more of the subscribers S1, S2, S3, S4 and one or more of the non-subscribers NS1, NS2 (see reference numeral 200), the computing device 16 then inputs the generated output into appropriate fields in the database 20. As shown in reference numeral 202, the computing device 16 scans the database 20 to determine if the received output (i.e., raw sensor data or data derived from the raw sensor data) is present in the registry database 20. In some instances, the generated output (e.g., generated using analytics) is not present in the registry database, and thus *de novo* fields are generated and populated with this information (see reference numeral 204). In other instances, the output requires removal of information in current fields, or removal of the fields themselves, and thus these fields may be depopulated (see reference numeral 208) or even deleted (see reference numeral 210). In still other instances, the output renders information that is then-currently populated in one or more fields obsolete and/or incorrect, and thus the output may be used to repopulate these pre-existing fields (see reference numeral 212). As such, the set of database 20 fields can grow, shrink, or remain the same after the query is run, analytics are provided, and output is generated.

When the database 20 is updated, it is to be understood that these updates may also affect one or more workflows upstream, downstream, and or at the point at which the database 20 is updated (e.g., at the node where the request entry was submitted, or the triggering event occurred, or the audit was initiated). In such instances, the computing device 16 can automate a process, a response, or an action for one or more users at the node or another node that is participating in the workflow and that is or could be affected by these updates. In the example previously discussed herein pertaining to the document and the courier, the computing device 16 may automate an action for the user which states that he should contact the courier service to determine if the document delivery will be delayed due to the grounded plane.

In addition to the output generated from a query, it is to be understood that the computing device 16 and the cloud computing network 12 are configured to post additional information to a user's profile and/or one or more workflows based upon the levels of discretization of access control (i.e., security levels of user(s) associated with the profile and/or workflows). For example, the computing device 16 may add information regarding payment methods, new services, etc. to a user's profile that has access to make payments, add new services to the service plan, etc. Furthermore, the computing device 16 and the cloud computing network 12 may also publicly post information on the website hosting the access point 34. This information may be based upon general security levels, such that any person accessing the website is not given information that he/she is not entitled to receive. This information may be general information about the document workflow management system 18, services and corresponding prices, general information about the node/state of a workflow, etc.

Fig. 3 illustrates a general embodiment of a product 22 that is transmitted through a supply chain from one subscriber S1, S2, S3, S4 to the next. As illustrated, the product 22 includes both a pollable sensor PS, 24' and a self reporting sensor SRS, 24' which may be scanned in or programmed to report its data at a node of each subscriber S1, S2, S3, S4. The sensors PS, 24' and SRS, 24' may be initialized when entering the chain, and may collect various data (depending upon the type of sensor(s) used) along the product's route.

At initialization, one of the sensor(s) PS, 24' and SRS, 24' may include a 96-bit serialized global traceability identification number (SGTIN), which include core information used for successive digital signing by shipper/recipient pairs along the supply chain. The 96 bits in the SGTIN include the header (8 bits), the filter (3 bits specifying if the tagged object is an item, case or pallet), the partition (3 bits indicating how the subsequent fields are partitioned so that their data can be recovered and interpreted correctly), the company prefix (20-40 bits and contains the company's EAN.UCC Company Prefix), the item reference (4-24 bits and contains the item's GTIN item reference number, and the serial number (38 bits containing the product's unique serial number). As the product moves along the chain, additional information that may be added to the database includes, lot number, potency, expiration, National Drug Code and Electronic Product Code, manufacturer (e.g., S1), distributor (e.g., S2), wholesaler or pharmacy (e.g., S3), a unique identifier of the salable unit, or the like. This type of information may be available at each node of each subscriber S1, S2, S3, S4.

As the product 22 moves through the supply chain, the system 18 may run queries to supplement the data provided by the product 22 with sensor data from subscribers S1, S2, S3, S4 and non-subscribers NS1, NS2. As previously mentioned, these queries may be run in response to a triggering event, a request entry, or an externally imposed condition. As illustrated in Fig. 3, these data triggers may occur at any time (e.g., a triggering event occurs when the product is en route between subscribers S2 and S2; a request entry is received while the product is at subscriber S2; and an externally imposed condition occurs at subscriber S3). Any or all of these sensor data collection events may result in the generation of output that alters the content in the database 20 and/or affects a workflow associated with the product upstream, downstream, or at the point that the data collection event takes place. As one non-limiting example, accelerometer sensor data from a delivery vehicle of the subscriber S2 may indicate that sudden deceleration occurred while the product 22 was on the vehicle. This information may be used to generated an alert for subscriber S3 to check the contents of the product 22 for breakage, damage, etc. As another non-limiting example, temperature and humidity sensor data for location X retrieved from a weather website associated with a non-subscriber NS1 may be used to calculate the effective shelf-life reduction of a product in transit that sat at location X for two weeks. In many instances, a combination of non-subscriber, public, subscriber and private networks will be used to obtain the data and generate new output for the database 20.

Fig. 4 illustrates a specific example of the method. In this example, the product 22 may be, for example, prescription drugs that will ultimately be shipped from California to Michigan. The subscribers S1, S2, S3, S4 may be, respectively, the manufacturer of the drugs (located in CA), the distributor of the drugs (located in CA), the pharmacy (located in MI), and the consumer.

Reference numeral 400 and 402 illustrates steps that may occur outside of the system 18. This is due in part to the fact that the data collection at this point involves a non-subscriber of the system 18, and a query of the non-subscriber's website has not yet been run. As shown at reference numeral 400, seismic sensor data may be collected at non-subscriber sensors 24 that are located in Hawaii. In this particular example, the data may indicate that some seismic activity is taking place in the Pacific Ocean east of Hawaii. Multiple readings may be taken which indicate that the activity is lessening by the day. The seismic sensor data is transmitted to the host server, e.g., H5, of this sensor network. The host server H5 posts the seismic data to one or more posting locations on a website of the non-subscriber NS1, as shown at reference numeral 402. Data transfer from the sensor 24, to the host server H5, and ultimately to the posting location may be accomplished via wireless and/or wired communications.

Reference numerals 404 through 410 illustrate the involvement of the system 18. As illustrated in reference numeral 404, the computing device 16 may receive temperature data of the city in which the distributor S2 is located. The raw temperature data may come from a dedicated sensor network including temperature sensors 24 configured to transmit this data at predetermined intervals, e.g., four times a day. The distributor S2 may have requested the temperature data through the system 18 because the pharmaceuticals are temperature sensitive, and thus the distributor S2 can monitor this data simply by logging into the system 18 and accessing any workflows associated with the pharmaceuticals. The computing device 16 may be programmed to recognize, for example, when the temperature has exceeded a predetermined threshold (e.g., ten degrees below the maximum temperature for the drugs), or to recognize, for example, when the temperature has risen a certain amount of a predetermined number of days (e.g., which may be indicative of a storm, etc.). As illustrated in this example, the computing device 16 recognizes that an unseasonable rise in temperature has occurred while the drugs are being transported to the distributor S2 from the manufacturer S1. It is to be understood that the computing device 16 may recognize the location of the drugs because of data input by the manufacturer S1 upon shipping the product.

Upon recognition of the temperature rise (i.e., triggering event), the computing device 16 transmits the data related to the triggering event to the mapping engine 26. The mapping engine 26 maps this information into a query, for example, related to the weather in and around the city that the distributor S2 is located in: This query will be directed at subscriber and non-subscriber websites (see reference numeral 406), and will attempt to obtain sensor data that will help explain the temperature rise. Utilizing the query, the engine 26 locates, in this example, the salient web-accessible information storage spaces W5, and extracts the seismic sensor data therefrom, as shown at reference numeral 408.

When the mapping engine 26 receives the results of the search, the engine 26 transmits the results to the computing device 16, which, in turn, analyzes the raw sensor data transmits this information or other information derived therefrom to the database 20, as shown at reference numeral 410. In this particular example, the rise in temperature and the seismic data may be indicative of an impending earthquake in or near the city of the distributor S2. It is to be understood that the computing device 16 is configured with software and analytics to receive various types of sensor data and to deduce other information from this data.

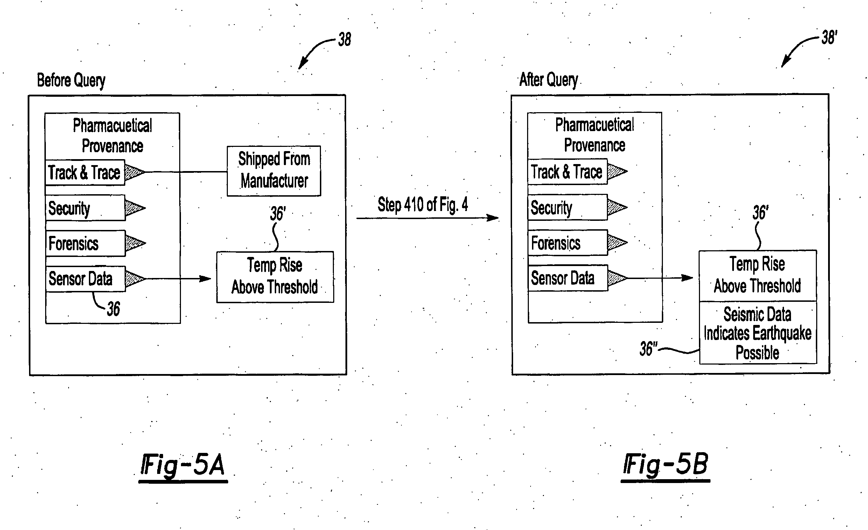

When the sensor data is analyzed, the computing device 16 can cross-check the received information, and any information deduced therefrom, with the database 20 to determine if i) fields exist for this data, and ii) if these fields exist, whether these fields have been updated with the information. As illustrated in Fig. 5A, in this particular example, the screen shot 38 of the provenance record indicates that a sensor data field 36 and a sub-field 36' has been created for the temperature information. As illustrated, there are no other pre-existing fields 36 or pre-existing sub-fields 36' related to sensor data. In this particular example then, the database 20 may create a *de novo* (i.e., new) field/sub-field 36, 36' that is generated to have the new sensor data populated therein. Fig. 5B illustrates the updated screen short 38' after one or more additional sensor data sub-fields 36" are generated, and the raw seismic information and/or the alert regarding the earthquake is input into the sub-fields 36". Once input and stored in the database 20, this information may be viewed by any user with access to the provenance record of the pharmaceuticals.

In embodiments in which the sensor data collection event/search is triggered by a user request, it is to be understood that the collected information may be transmitted to the user via an email, a text message, a short service messaging (SMS) message, an instant message, or combinations thereof. This type of message may be sent to the user on his/her computing device 14 (or another electronic device associated with the user). In another embodiment, the computing device 16 may instruct the user to pull up (on the screen of his/her computing device 14) a provenance record of the pharmaceuticals and view a particular workflow (e.g., sensor data) or field to view the requested information.

The embodiments of the system 10 and the methods disclosed herein may be used to update the workflow management system 18 regularly and to generate more complete provenance records for products and documents by including sensor data from a variety of sources (including subscribers and non-subscribers to the workflow management system 18).

As one non-limiting example, the system 10 may be used for anticipating problems in a supply chain, and planning for these problems or at least planning the reaction to these problems. In this example, the information input at subscribers A and B indicates that the product is scheduled to be shipped from Europe to the United Stated via plane in one week. Non-subscriber sensor network information may be used to anticipate delays and/or cancellations in air travel due to weather conditions and/or reported delays/aggregated air traffic data. For example, data may be retrieved from a news website indicating that a volcano has erupted in Iceland and from a weather website indicating that conditions are ripe to cause ash and winds to be directed toward Europe. This information may be used to inform subscriber B that air travel in Europe may be interrupted and that another mode of transportation should be considered for the product shipment.

As another non-limiting example, the system 10 may be used for validation of an existing track-and-trace/provenance through lack of contradiction. The prevalent form of counterfeiting is to represent illicit goods as authentic goods, which generally means that if there is a mass serialized (unique) ID on the legitimate product, the counterfeit product will replicate one or more legitimate ones. Contradiction occurs when a legitimate object is observed on two or more separate paths. The workflow provenance of one of the products is being provided, and the product is supposed to have passed through subscriber A, B, C and D, in that order. Ancillary sensor data collected by system 18 (e.g., from a blog located on node C's website) indicates traversal from A to C to B to D, and thus the computing device 16 may recognize a contradiction and flag the product as being suspect.

As still another non-limiting example, the system 10 may be used for validation of missing reads in an existing track-and-trace/provenance through non-contradictory sensor information. In this example, the information input at subscribers A, B and D is obtained for the provenance, but there is a missed read at subscriber C. Non-subscriber sensor network information may be used to provide a read at Subscriber C. For example, data may be retrieved from a news website which posted surveillance footage of rats in a warehouse of Subscriber C, and product at issue is shown in the footage. This information credibly located the product at Subscriber C at the timing between leaving Subscriber B and arriving at Subscriber D. The data aggregation thus creates a fully-explicit provenance (i.e., a complete time stamp) for the product.

In other instances, the sensor data aggregation accomplished via the system 10 is able to create an implicit provenance record, which allows the user of the system to imply that a product was at a particular place at a particular time.

The system 10 disclosed herein may be used with other data collection in order to expand the use of the sensor data. For example, the sensor data infrastructure may be used atop a mobile commerce/mobile barcoding infrastructure, such as the Open Mobile Alliance (OMA), or a smart tag infrastructure.

While several embodiments have been described in detail, it will be apparent to those skilled in the art that the disclosed embodiments may be modified. Therefore, the foregoing description is to be considered exemplary rather than limiting.

## Claims

1. An information tracking system (10), comprising:
a plurality of sources (S1, S2, S3, S4) that subscribe to a workflow management system (18);
a sensor network (NS1), (NS2) that is unaffiliated with the workflow management system (18);
a registry database (20), including:
pre-existing fields configured to store data received from one or more of the plurality of sources (S1, S2, S3, S4) or from the sensor network (NS1), (NS2); and
de novo fields configured to be generated as a result of a sensor data collection event and configured to store sensor data received from one or more of the plurality of sources (S1, S2, S3, S4) or from the sensor network (NS1), (NS2); and
an engine (26) configured to actively collect sensor data from the plurality of sources (S1, S2, S3, S4) and from the sensor network (NS1), (NS2).

2. The information tracking system (10) as defined in claim 1 wherein the sensor network (NS1), (NS2) includes one or more sensors (24) that are configured to collect raw data, and wherein the system (10) further comprises:
a web-accessible information storage space (W5, W6) affiliated with the sensor network (NS1), (NS2); and
a host server (H5, H6) of the web-accessible information storage space (W5, W6) configured to receive the raw data from the one or more sensors (24) and to post the raw data or other data derived from the raw data to the web- accessible information storage space (W5, W6).

3. The information tracking system (10) as defined in claim 2 wherein the one or more sensors (24) are selected from pollable sensors, self-reporting sensors, or combinations thereof.

4. The information tracking system (10) as defined in any of claims 2 or 3 wherein the one or more sensors (24) are selected from surveillance systems, radar sensors, radiofrequency sensors, imaging sensors, global positioning systems, weather sensors, temperature sensors, devices configured to report predetermined information about an event, devices configured to report predetermined information about a signal type, and combinations thereof.

5. The information tracking system (10) as defined in any of claims 2 through 4 wherein the engine (26) is configured to perform search-engine interrogation of the web-accessible information storage space (W5, W6), scrubbing of the web-accessible information storage space (W5, W6), or combinations thereof.

6. The information tracking system (10) as defined in any of claims 2 through 5, further comprising:
a computing device (14) configured to transmit a request entry; and a cloud computing network (12) configured to be accessible by the computing device (14) and configured to provide an access point (32) into the engine (26);
wherein the engine (26) is further configured to receive the request entry, and extract and filter salient information from a web-accessible information storage space (W1, W2, W3, W4) affiliated with one or more of the plurality of sources (S1, S2, S3, S4) and the web-accessible information storage space (W5, W6) affiliated with the sensor network (NS1, NS2) based upon the request entry.

7. The information tracking system (10) as defined in any of claims 1 through 6 wherein the plurality of sources (S1, S2, S3, S4) that subscribe to the workflow management system (18) include sensor networks that are selected from satellite-based sensor networks, mobile network based sensor networks, or combinations thereof.

8. The information tracking system (10) as defined in any of claims 1 through 7, further comprising a filter (32) in operative communication with the registry database, the filter (32) configured to at least one of aggregate, categorize, or classify the collected sensor data.

9. The information tracking system (10) as defined in any of claims 1 through 8, further comprising an other computing device (16) configured to:
receive the collected sensor data; and
at least one of:
i) generate and populate the de novo fields based upon the collected sensor data;
ii) depopulate or delete the pre-existing fields based upon the collected sensor data; or
iii) repopulate the pre-existing fields based upon the collected sensor data.

10. A method operating on a cloud computing network (12) for tracking sensor data, the cloud computing network (12) having instructions stored thereon, the instructions being executable to perform the steps of:
actively collecting, via an engine (26), sensor data from a plurality of sources (S1, S2, S3, S4) that subscribe to a workflow management system (18) and a sensor network (NS1, NS2) that is unaffiliated with the workflow management system (18); and updating, via a computing device (16) in operative communication with the engine, a registry database (20) with the sensor data by at least one of:
i) repopulating a pre-existing field of the registry database based upon the collected sensor data; or
ii) depopulating or deleting a pre-existing field of the registry database based upon the collected sensor data; or
iii) creating at least one de novo field in the registry database; and populating the at least one de novo field based upon the collected sensor data.

11. The method as defined in claim 10 wherein actively collecting sensor data from the sensor network (NS1, NS2) is accomplished by:
performing a web service search of a website affiliated with the sensor network (NS1, NS2) to locate one or more salient web-accessible information storage spaces (W5, W6) of the website; and
extracting sensor data from the one or more salient web-accessible information storage spaces (W5, W6) of the website.

12. The method as defined in claim 1 1 wherein performing the web service search is accomplished by performing a search-engine interrogation of the website, by scrubbing the website, or by combinations thereof.

13. The method as defined in any of claims 1 1 and 12 wherein the sensor network (NS1, NS2) includes one or more sensors (24) that are configured to collect raw data, and wherein the method further comprises:
transmitting, via a wireless data connection, raw data to a host server (H5, H6) of the website from the one or more sensors (24); and
posting, via the host server (H5, H6), the raw data or other data derived from the raw data on the website.

14. The method as defined in any of claims 10 through 13, further comprising:
receiving, from an other computing device (14) in communication with the engine (26), a request entry at the engine (26); and
mapping the request entry to a query to be used for mining a website affiliated with one or more of the plurality of sources (S1, S2, S3, S4) and a website affiliated with the sensor network (NS1, NS2) based upon the request entry to actively collect the sensor data.

15. The method as defined in claim 14, further comprising generating output, based upon the collected data, for one of a plurality of document-based workflows in the registry database (20), the output affecting a condition of the one of the plurality of document-based workflows upstream, downstream, or at a point at which the request entry is received.

## Patentansprüche

1. System zur Informationsverfolgung (10), das Folgendes umfasst:
eine Vielzahl von Quellen (S1, S2, S3, S4), die an einem Workflow-Management-System (18) teilnehmen;
ein Sensornetz (NS1, NS2), das nicht mit dem Workflow-Management-System (18) verbunden ist;
eine Registrierungsdatenbank (20), einschließlich:
bereits existierenden Feldern, die dazu konfiguriert sind, Daten zu speichern, die von einer oder mehreren der Vielzahl von Quellen (S1, S2, S3, S4) und von dem Sensornetz (NS1, NS2) empfangen wurden; und
neue Felder, die dazu konfiguriert sind, als Ergebnis eines Sensordatensammelevents erzeugt zu werden, und dazu konfiguriert sind, Sensordaten zu speichern, die von einer oder mehreren der Vielzahl von Quellen (S1, S2, S3, S4) und von dem Sensornetz (NS1, NS2) empfangen wurden; und
eine Maschine (26), die dazu konfiguriert ist, aktiv Sensordaten von der Vielzahl von Quellen (S1, S2, S3, S4) und von dem Sensornetz (NS1, NS2) zu sammeln.

2. System zur Informationsverfolgung (10) nach Anspruch 1, wobei das Sensornetz (NS1, NS2) einen oder mehrere Sensor(en) (24) beeinhaltet, der/die dazu konfiguriert ist/sind, Ausgangsdaten zu sammeln, und wobei das System (10) ferner Folgendes umfasst:
einen über das Web zugänglichen Informationsspeicherplatz (W5, W6), der mit dem Sensornetz (NS1, NS2) verbunden ist; und
einen Host-Server (H5, H6) des über das Web zugänglichen Informationsspeicherplatzes (W5, W6), der dazu konfiguriert ist, die Ausgangsdaten von dem einen oder den mehreren Sensor (en) (24) zu empfangen und die Ausgangsdaten oder andere von den Ausgangsdaten abgeleitete Daten an den über das Web zugänglichen Informationsspeicherplatz (W5, W6) zu senden.

3. System zur Informationsverfolgung (10) nach Anspruch 2, wobei der eine oder die mehreren Sensor (en) (24) aus abfragbaren Sensoren, selbstberichtenden Sensoren oder Kombinationen davon ausgewählt wird/werden.

4. System zur Informationsverfolgung (10) nach einem der Ansprüche 2 oder 3, wobei der eine oder die mehreren Sensor(en) (24) aus Überwachungssystemen, Radarsensoren, Funkfrequenzsensoren, bildgebenden Sensoren, globalen Positioniersystemen, Wettersensoren, Temperatursensoren, Geräten, die dazu konfiguriert sind, vorbestimmte Informationen über ein Ereignis zu melden, Geräten, die dazu konfiguriert sind, vorbestimmte Informationen über einen Signaltyp zu melden, und Kombinationen davon ausgewählt wird/werden.

5. System zur Informationsverfolgung (10) nach einem der Ansprüche 2 bis 4, wobei die Maschine (26) dazu konfiguriert ist, Suchmaschinenabfragen des über das Web zugänglichen Informationsspeicherplatzes (W5, W6) durchzuführen, den über das Web zugänglichen Informationsspeicherplatz (W5, W6) zu bereinigen, oder Kombinationen davon.

6. System zur Informationsverfolgung (10) nach einem der Ansprüche 2 bis 5, das ferner Folgendes umfasst:
ein Rechengerät (14), das dazu konfiguriert ist, einen Abfrageeintrag zu übermitteln; und
ein Cloud-Rechennetz (12), das dazu konfiguriert ist, vom Rechengerät (14) aus zugänglich zu sein, und dazu konfiguriert ist, einen Zugangspunkt (32) in die Maschine (26) bereitzustellen;
wobei die Maschine (26) ferner dazu konfiguriert ist, den Abfrageeintrag zu empfangen, und wichtige Informationen von einem über das Web zugänglichen Informationsspeicherplatz (W1, W2, W3, W4), der mit einer oder mehreren der Vielzahl von Quellen (S1, S2, S3, S4) verbunden ist, und dem über das Web zugänglichen Informationsspeicherplatz (W5, W6), der mit dem Sensornetz (NS1, NS2) verbunden ist, zu extrahieren und zu filtern, basierend auf dem Abfrageeintrag.

7. System zur Informationsverfolgung (10) nach einem der Ansprüche 1 bis 6, wobei die Vielzahl von Quellen (S1, S2, S3, S4), die an dem Workflow-Management-System (18) teilnehmen, Sensornetze beinhaltet, die aus satellitenbasierten Sensornetzen, mobilen netzbasierten Sensornetzen oder Kombinationen davon ausgewählt werden.

8. System zur Informationsverfolgung (10) nach einem der Ansprüche 1 bis 7, das ferner einen Filter (32) in operativer Kommunikation mit der Registrierungsdatenbank umfasst, wobei der Filter (32) dazu konfiguriert ist, die gesammelten Sensordaten mindestens entweder zu aggregieren, zu kategorisieren oder zu klassifizieren.

9. System zur Informationsverfolgung (10) nach einem der Ansprüche 1 bis 8, das ferner ein weiteres Rechengerät (16) umfasst, das dazu konfiguriert ist:
die gesammelten Sensordaten zu empfangen; und
mindestens:
i) die neuen Felder basierend auf den gesammelten Sensordaten zu erzeugen und zu füllen; und/oder
ii) die bereits existierenden Felder basierend auf den gesammelten Sensordaten zu leeren oder zu löschen; und/oder
iii) die bereits existierenden Felder basierend auf den gesammelten Sensordaten neu zu füllen.

10. Verfahren zum Nachverfolgen von Sensordaten, das in einem Cloud-Rechennetz (12) arbeitet, wobei in dem Cloud-Rechennetz (12) Anweisungen gespeichert sind, die dazu ausführbar sind, die folgenden Schritte durchzuführen:
aktives Sammeln von Sensordaten von einer Vielzahl von an einem Workflow-Management-System (18) teilnehmenden Quellen (S1, S2, S3, S4) und einem mit dem Workflow-Management-System (18) nicht verbundenen Sensornetz (NS1, NS2) über eine Maschine (26); und
Aktualisieren einer Registrierungsdatenbank (20) mit den Sensordaten über ein Rechengerät (16) in operativer Kommunikation mit der Maschine durch mindestens einen der folgenden Schritte:
i) Neubefüllen eines bereits existierenden Feldes der Registrierungsdatenbank basierend auf den gesammelten Sensordaten; oder
ii) Leeren oder Löschen eines bereits existierenden Feldes der Registrierungsdatenbank basierend auf den gesammelten Sensordaten; oder
iii) Erzeugen von mindestens einem neuen Feld in der Registrierungsdatenbank; und
Füllen des mindestens einen neuen Feldes basierend auf den gesammelten Sensordaten.

11. Verfahren nach Anspruch 10, wobei das aktive Sammeln von Sensordaten von dem Sensornetz (NS1, NS2) erreicht wird durch:
Durchführen einer Webdienstsuche einer mit dem Sensornetz (NS1, NS2) verbundenen Website, um einen oder mehrere wichtige(n) über das Web zugängliche Informationsspeicherplatz/Informationsspeicherplätze (W5, W6) der Website zu lokalisieren; und
Extrahieren von Sensordaten von dem einen oder den mehreren wichtigen über das Web zugänglichen Informationsspeicherplatz/Informationsspeicherplätzen (W5, W6) der Website.

12. Verfahren nach Anspruch 11, wobei das Durchführen der Webdienstsuche durch das Durchführen einer Suchmaschinenabfrage der Website, durch Bereinigen der Website oder durch Kombinationen davon erreicht wird.

13. Verfahren nach einem der Ansprüche 11 und 12, wobei das Sensornetz (NS1, (NS2) einen oder mehrere Sensor(en) (24) beinhaltet, der/die dazu konfiguriert ist/sind, Ausgangsdaten zu sammeln, und wobei das Verfahren ferner Folgendes umfasst:
Übertragen von Ausgangsdaten von dem einen oder den mehreren Sensor(en) (24) über eine Funkdatenverbindung an einen Host-Server (H5, H6) der Website; und
Senden der Ausgangsdaten oder anderer von den Ausgangsdaten abgeleiteten Daten über den Host-Server (H5, H6) an die Website.

14. Verfahren nach einem der Ansprüche 10 bis 13, das ferner Folgendes umfasst:
Empfangen eines Abfrageeintrags von einem anderem Rechengerät (14) in Kommunikation mit der Maschine (26) an der Maschine (26); und
Abbilden des Abfrageeintrags in eine Anfrage, die zum Daten-Mining einer mit einer oder mehreren der Vielzahl von Quellen (S1, S2, S3, S4) verbundenen Website und einer mit dem Sensornetz (NS1, NS2) verbundenen Website zu verwenden ist, basierend auf dem Abfrageeintrag, um die Sensordaten aktiv zu sammeln.

15. Verfahren nach Anspruch 14, das ferner basierend auf den gesammelten Daten das Erzeugen einer Ausgabe für einen einer Vielzahl von dokumentbasierten Workflows in der Registrierungsdatenbank (20) umfasst, wobei die Ausgabe eine Bedingung des einen der Vielzahl von dokumentbasierten Workflows vor, nach oder an einem Punkt, an dem der Abfrageeintrag empfangen wird, beeinflusst.

## Revendications

1. Système de suivi d'informations (10), comprenant :
une pluralité de sources (S1, S2, S3, S4) qui s'abonnent à un système de gestion de flux de travail (18) ;
un réseau de capteurs (NS1), (NS2) qui n'est pas affilié au système de gestion de flux de travail (18) ;
une base de données d'enregistrement (20), comprenant :
des champs préexistants configurés pour stocker des données provenant d'une ou de plusieurs sources parmi la pluralité de sources (S1, S2, S3, S4) et provenant du réseau de capteurs (NS1), (NS2) ; et
des champs de novo configurés pour être générés suite à un événement de collecte de capteur et configurés pour stocker des données de capteur provenant d'une ou de plusieurs sources parmi la pluralité de sources (S1, S2, S3, S4) et provenant du réseau de capteurs (NS1), (NS2) ; et
un moteur (26) configuré pour collecter activement des données de capteur à partir de la pluralité de sources (S1, S2, S3, S4) et à partir du réseau de capteurs (NS1), (NS2).

2. Système de suivi d'informations (10) selon la revendication 1 dans lequel le réseau de capteurs (NS1), (NS2) comprend un ou plusieurs capteurs (24) qui sont configurés pour collecter des données brutes, et dans lequel le système (10) comprend en outre :
un espace de stockage d'informations accessible par Internet (W5, W6) affilié au réseau de capteurs (NS1), (NS2) ; et
un serveur hôte (H5, H6) de l'espace de stockage d'informations accessible par Internet (W5, W6) configuré pour recevoir les données brutes provenant d'un ou de plusieurs capteurs (24) et pour envoyer les données brutes ou d'autres données dérivées des données brutes à l'espace de stockage d'informations accessible par Internet (W5, W6).

3. Système de suivi d'informations (10) selon la revendication 2 dans lequel le ou les capteurs (24) sont sélectionnés parmi des capteurs interrogeables, des capteurs d'auto-signalisation ou leurs combinaisons.

4. Système de suivi d'informations (10) selon l'une quelconque des revendications 2 ou 3 dans lequel le ou les capteurs (24) sont sélectionnés parmi des systèmes de surveillance, des capteurs radar, des capteurs à fréquence radio, des capteurs d'imagerie, des systèmes de positionnement global, des capteurs météorologiques, des capteurs de température, des dispositifs configurés pour signaler des informations prédéterminées sur un événement, des dispositifs configurés pour signaler des informations prédéterminées sur un type de signal et leurs combinaisons.

5. Système de suivi d'informations (10) selon l'une quelconque des revendications 2 à 4 dans lequel le moteur (26) est configuré pour exécuter une interrogation de moteur de recherche de l'espace de stockage d'informations accessible par Internet (W5, W6), pour purger l'espace de stockage d'informations accessible par Internet (W5, W6), ou leurs combinaisons.

6. Système de suivi d'informations (10) selon l'une quelconque des revendications 2 à 5, comprenant en outre :
un dispositif informatique (14) configuré pour transmettre une entrée de demande ; et
un réseau informatique en nuage (12) configuré pour être accessible par le dispositif informatique (14) et configuré pour fournir un point d'accès (32) dans le moteur (26) ;
dans lequel le moteur (26) est en outre configuré pour recevoir l'entrée de demande, et extraire et filtrer des informations saillantes d'un espace de stockage d'informations accessible par Internet (W1, W2, W3, W4) affilié à une ou plusieurs sources parmi la pluralité de sources (S1 ; S2, S3, S4) et de l'espace de stockage d'informations accessible par Internet (W5 ; W6) affilié au réseau de capteurs (NS1, NS2) sur la base de l'entrée de demande.

7. Système de suivi d'informations (10) selon l'une quelconque des revendications 1 à 6 dans lequel la pluralité de sources (S1, S2, S3, S4) qui s'abonnent au système de gestion de flux de travail (18) comprennent des réseaux de capteurs qui sont sélectionnés parmi des réseaux de capteurs par satellite, des réseaux de capteurs par réseau mobile ou leurs combinaisons.

8. Système de suivi d'informations (10) selon l'une quelconque des revendications 1 à 7, comprenant en outre un filtre (32) en communication opérationnelle avec la base de données d'enregistrement, le filtre (32) étant configuré au moins pour agréger, catégoriser ou classifier les données de capteur collectées.

9. Système de suivi d'informations (10) selon l'une quelconque des revendications 1 à 8, comprenant en outre un autre dispositif informatique (16) configuré pour :
recevoir les données de capteur collectées ; et
au moins une des étapes suivantes :
i) générer et remplir les champs *de novo* sur la base des données de capteur collectées ;
ii) dé-remplir ou supprimer les champs préexistants sur la base des données de capteur collectées ; ou
iii) remplir à nouveau les champs préexistants sur la base des données de capteur collectées.

10. Procédé fonctionnant sur un réseau informatique en nuage (12) pour suivre des données de capteur, le réseau informatique en nuage (12) disposant d'instructions stockées sur ce dernier, les instructions étant exécutables pour exécuter les étapes suivantes :
collecter activement, par l'intermédiaire d'un moteur (26), des données de capteur à partir d'une pluralité de sources (S1, S2, S3, S4), qui s'abonnent à un système de gestion de flux de travail (18), et d'un réseau de capteurs (NS1, NS2) qui n'est pas affilié au système de gestion de flux de travail (18) ; et
mettre à jour, par l'intermédiaire d'un dispositif informatique (16) en communication opérationnelle avec le moteur, une base de données d'enregistrement (20) avec les données de capteur par au moins une des étapes suivantes :
i) remplir à nouveau un champ préexistant de la base de données d'enregistrement sur la base des données de capteur collectée ou
ii) dé-remplir ou supprimer un champ préexistant de la base de données d'enregistrement sur la base des données de capteur collectées ; ou
iii) créer au moins un champ *de novo* dans la base de données d'enregistrement ; et
remplir ledit champ *de novo* sur la base des données de capteur collectées.

11. Procédé selon la revendication 10 dans lequel la collecte active des données de capteur à partir du réseau de capteurs (NS1, NS2) est accomplie :
en effectuant une recherche de service Web d'un site Internet affilié au réseau de capteurs (NS1, NS2) pour localiser un ou plusieurs espaces de stockage d'informations accessibles par Internet saillants (W5, W6) du site Internet ; et
extraire des données de capteur du ou des espaces de stockage d'informations accessibles par Internet saillants (W5, W6) du site Internet.

12. Procédé selon la revendication 11 dans lequel l'exécution de la recherche de service Web est accomplie en exécutant une interrogation du moteur de recherche du site Internet, en purgeant le site Internet, ou par leurs combinaisons.

13. Procédé selon l'une quelconque des revendications 11 et 12 dans lequel le réseau de capteurs (NS1, NS2) comprend un ou plusieurs capteurs (24) qui sont configurés pour collecter des données brutes, et dans lequel le procédé comprend en outre :
la transmission, par l'intermédiaire d'une connexion de données sans fil, de données brutes à un serveur hôte (H5, H6) du site Internet à partir du ou des capteurs (24) ; et
l'envoi, par l'intermédiaire du serveur hôte (H5, H6), des données brutes ou d'autres données dérivées des données brutes sur le site Internet.

14. Procédé selon l'une quelconque des revendications 10 à 13, comprenant en outre :
la réception, à partir d'un autre dispositif informatique (14) en communication avec le moteur (26), d'une entrée de demande au niveau du moteur (26) ; et
la mise en correspondance de l'entrée de demande avec une interrogation à utiliser pour miner un site Internet affilié à une ou plusieurs sources parmi la pluralité de sources (S1, S2, S3, S4) et un site Internet affilié au réseau de capteurs (NS1, NS2) sur la base de l'entrée de demande afin de collecter activement les données de capteur.

15. Procédé selon la revendication 14, comprenant en outre la génération d'une sortie, sur la base des données collectées, pour un flux de travail parmi une pluralité de flux de travail à base de documents dans la base de données d'enregistrement (20), la sortie affectant un état du flux de travail parmi la pluralité de flux de travail à base de documents en amont, en aval ou à une position où l'entrée de demande est reçue.
